# EUROPEAN PATENT APPLICATION

(11) **EP 2 876 629 A1**
(43) Date of publication of application: **27.05.2015**
(21) Application number: 14191405.1
(22) Date of filing: 03.11.2014
(51) Int. Cl.: G09F 7/22, G09F 21/04, B60R 13/00, E01F 9/011, E01F 9/012, F16B 21/16, F16B 21/18

(54) **Device for locking identification panels and identification panel comprising the device.**

(30) Priority: 22.11.2013 IT RN20130047
(71) Applicant: BICMA S.r.l., 47836 Mondaino (Rimini) (IT)
(72) Inventor: Mazzini, Franco, 47836 Mondaino (RIMINI) (IT)
(74) Representative: Zermani, Umberto

(57) **Abstract**

Described is locking device for panels, preferably of industrial vehicles, characterised in that it comprises a first body (2) which can be associated with a wing (12) of the panel (10) and equipped with a through hole (3) extending along an operating direction (A) between a relative first edge (3a) and a relative second edge (3b), at least one pin (5) extending between a relative first end (5a) and a relative second end (5b) and slidable in the hole (3) between a first position, wherein the first end (5a) protrudes outside the hole (3) and is distal from the first edge (3a), and a second position wherein the first end (5a) is proximal to the first edge (3a) and a second body (7), which can be associated with a further wing (11) of the panel (10) or a fixed wall of the vehicle (100), and which can be engaged with the first end (5a) of the pin (5) for fixing the position.

## Description

This invention relates to a device for locking identification panels, preferably of industrial vehicles, and an identification panel comprising the device.

This invention is applicable in particular to the production of identification panels, preferably linked to the road haulage industry.

More specifically, this invention is focussed on those identification panels which are used to identify the nature of the load on a vehicle, which, once the contents of the vehicle have been unloaded, must be removed or hidden.

For this reason, "book-like" panels have been proposed on the market over time, formed by two wings hinged together so as to be movable between an open position, wherein the panel performs its identification function, and a closed position, wherein only the rear of one of the two wings remains visible.

In light of this, the problem arises of locking the movable wing in the two positions, which has been resolved in numerous ways.

A first solution consists in the presence of two rotatable eyelets, mounted respectively on the fixed wing and on the vehicle, and a oval seat in which they engage, respectively, in the closed position and in the open configuration.

A second solution comprises, on the other hand, the presence of a pair of rigid male pins, with a spherical tip, mounted respectively on the wing on the vehicle side (that is, fixed) and on the vehicle itself and a female receptacle on the mobile part of the panel.

Disadvantageously, both the known solutions described above have major drawbacks linked to the safety and, consequently, compliance with the relative current regulations.

In this regard, it should be noted that the current regulations require that, in identification panels or other ornamental elements, all the sharp components must protrude less than 5 millimetres from the surface of the vehicle and, if they exceed or equal 10 millimetres, they must be removable or yieldable at a predetermined pressure.

Obviously, the pins and the rotatable eyelets of the prior art solutions do not comply with this requirement since, having an elongate shape and projecting for more than 10 mm, they are a source of danger for anyone standing near the vehicle.

The aim of this invention is to provide a device for locking panels of industrial vehicles and a panel for industrial vehicles which is able to overcome the above mentioned drawbacks of the prior art.

More specifically, the aim of this invention is to provide a device for locking panels of industrial vehicles and a panel for industrial vehicles which is safe and at the same time easy and inexpensive to make.

More in detail, the aim of this invention is to provide a device for locking identification panels and an identification panel in accordance with current regulations.

These aims are achieved by a device for locking identification panels (of industrial vehicles) and an identification panel having the features described in one or more of the following claims, and in particular by a locking device comprising a first body, which can be associated with a wing of the panel and equipped with a through hole extending along an operating direction between a relative first and a relative second edge, at least one pin extending between a relative first end and a relative second end and slidable in the hole between a first position, wherein the first edge protrudes outside the hole and is distal from the first edge, and a second position wherein it is proximal to the first edge and a second body, which can be associated with a further wing of the panel or a fixed wall of the vehicle and which can be engaged with the first end of the pin to fix the position.

Advantageously, the presence of a pin slidable inside the hole allows the protrusion to be limited or hidden when the panel is in the open condition, thus increasing its safety and thereby complying with the regulations. Preferably, the second body is equipped with an opening which can be aligned with the hole of the first body along the operating direction in such a way as to face the first edge of the hole.

The device also comprises elastic retaining means associated with the opening or with the first end of the pin and operating between the opening and the first end of the pin along a direction transversal to the operating direction; the elastic means being elastically mobile along the transversal direction between an interfering position, obstructing the sliding of the first end of the pin in the opening, and a non-interfering position, allowing the sliding of the first end of the pin in the opening.

It should be noted that the first end of the pin and/or the opening are shaped for moving the elastic means from the interfering position to the non-interfering position during the movement of the pin inside the opening along the operating direction.

In other words, the elastic means are movable transversely to the operating direction and engageable by the pin to move them from the interfering position to the non-interfering position; the pin has a peripheral portion substantially wedge-shaped, that is to say, having an angle such as to move the elastic means along the transversal direction during a movement of the pin in the operating direction.

Advantageously, in this way the locking and releasing of the pin are "automatic", that is to say, they can be performed simply by the movement of the pin along the operating direction without the need for any further operation by the user.

The panel according to this invention comprises a first wing and a second wing each equipped with a first face and a second face opposite to each other, wherein the first wing and the second wing are adjacent and rotatably associated in such a way that the second wing is rotatable relative to the first wing between an open position, wherein the wings are coplanar and side by side, and a closed position, wherein the wings are superposed and the respective first faces abut each other.

According to this invention, the panel comprises a locking device as described above, wherein the first body is associated with the second wing and the second body is associated with the first wing.

It should be noted that the first wing is fixed, that is, irremovably connected to the wall of the vehicle, whilst the second wing is movable rotatably between the open position and the closed position.

It should be noted that the first and the second body are positioned in such a way that, in the closed position, the opening is aligned with the hole of the first body along the operating direction.

Preferably, the locking device comprises two second bodies, one associated with the first wing of the panel and one associated with the fixed wall of the vehicle. The second bodies are substantially equidistant from an axis of rotation of the second wing.

Advantageously, in this way, even in the open position of the panel there are no protruding elements, since the pin is simply pressed inside the opening of the second body without parts remaining projecting from the first face of the wing.

Other features and advantages will become more apparent from the following description of a preferred, non limiting example embodiment of a device for locking panels of industrial vehicles and a panel for industrial vehicles as illustrated in the accompanying drawings, in which:

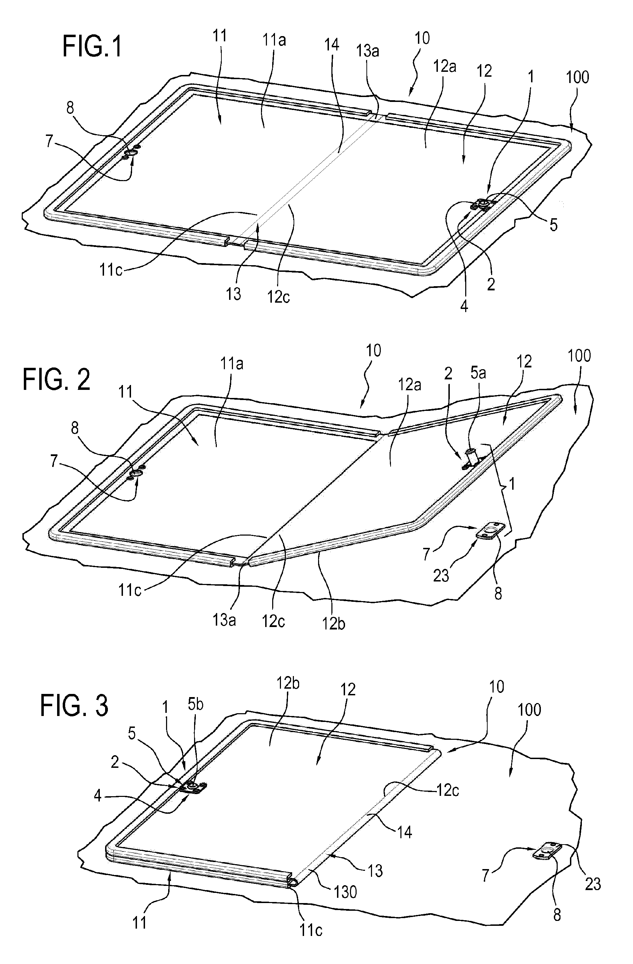

- Figures 1 to 3 show a panel for industrial vehicles in a succession of operating positions;

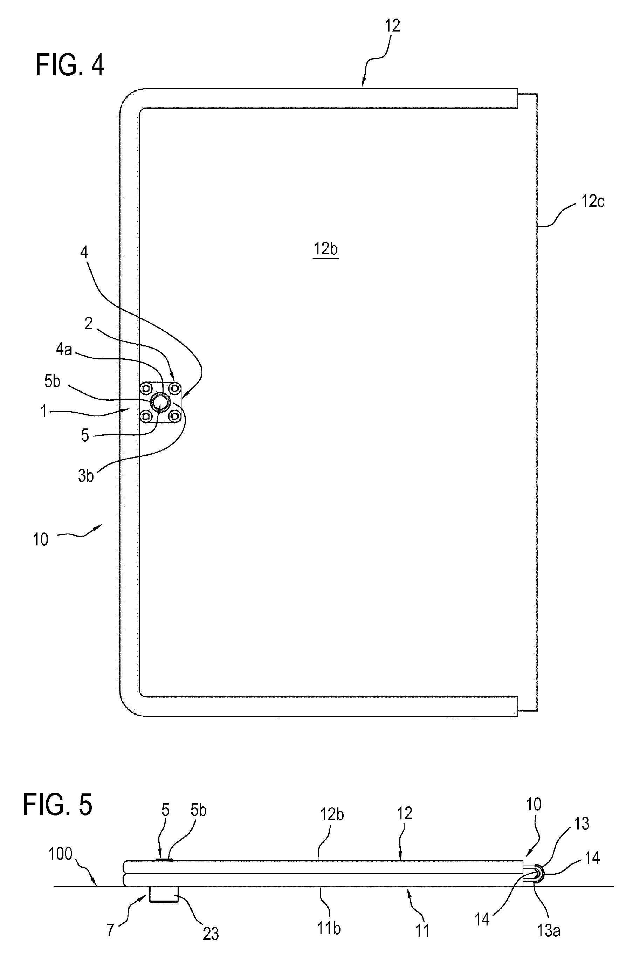

- Figures 4 and 5 show, respectively, a plan view and a side of the panel of Figure 3;

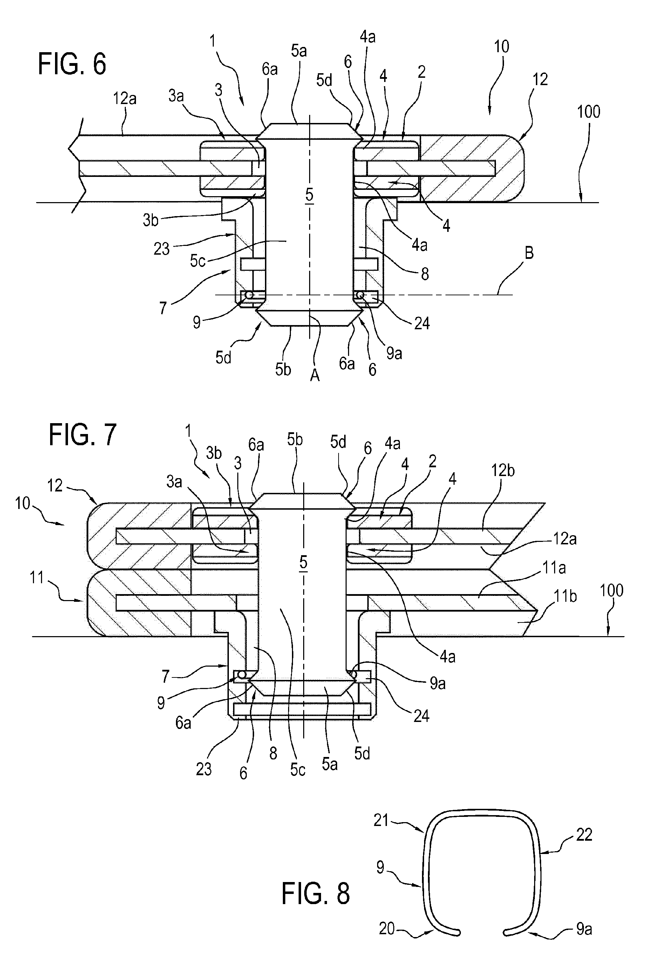

- Figures 6 and 7 show cross sections of the locking device according to this invention in the positions, respectively, of Figure 1 and Figure 3;
- Figure 8 shows a plan view of a detail of the locking device according to this invention.

With reference to the accompanying drawings, the numeral 1 denotes a locking device for identification panels 10, preferably for industrial vehicles 100, according to this invention.

The term "panels" means all those accessories and protrusions used both in industrial vehicles and on walls of other types, for identification purposes, that is to say, containing inside, by shape, colour or written content, information linked to the safety or to the material transported by the vehicle on which they are mounted.

More specifically, this invention is associated with identification panels 10 of the reversible type, that is, of the type which can be reclosed, equipped with at least one wing (or sheet) which is movable rotatably between two positions to make a respective first or a respective second face alternatively visible.

More specifically, the panel 10 according to this invention comprises a first wing 11 and a second wing 12 each equipped with a first face 11 a, 12a and a second face 11 b, 12b opposite one another.

The first wing 11 and the second wing 12 are adjacent to each other and rotatably associated in such a way that the second wing 12 is rotatable about the first wing 11 between an open position, wherein the wings 11, 12 are coplanar and side by side, and a closed position, wherein the wings are superposed and the respective first faces 11 a, 12a abut each other.

It should be noted that the first wing 11 is fixed, that is, connected to the wall of the vehicle 100, whilst the second wing 12 is movable rotatably between the open position and the closed position.

The first wing 11 and the second wing 12 are placed side by side, connected by respective side edges 11c, 12c through one or more hinge bodies 13.

Preferably, the hinge body 13 comprises a flexible flap 13a for connecting between the side edges 11c, 12c. Advantageously, in this way the safety is also increased by eliminating metal hinge elements.

More preferably, the hinge body 13 also comprises stiffening means 13b associated with the flexible flap 13a for guaranteeing straightness both when the panel 10 is in the open position and when it is in the closed position.

In the embodiment illustrated, the stiffening means 13b comprise two strips 14 between which the flexible flap 13a is interposed; thus, the flexible flap 13a is closed in a "pack" between the two metal strips. Preferably, the metallic strip 14 which in the open position faces the outside of the vehicle has a pattern (or colouring) similar to the first faces 11 a, 12a of the wings 11, 12, in such a way as to give continuity to the structure of the panel.

In the preferred embodiment, the flexible flap 13a is made of rubber. Alternatively, however, it might be made of fabric or other flexible materials suitable for the purpose.

The locking device 1 is thus associated (or can be associated) with the panel 10 to allow the fixing of the second wing 12 in the closed position and, preferably, in the open position.

The device 1 comprises a first body 2, which can be associated with a wing, preferably the second wing 12, of the panel 10 and equipped with a through hole 3 extending along an operating direction "A" between a relative first edge 3a and a relative second edge 3b.

The first body 2 is connected to the second wing 12, preferably close to a side edge opposite the side edge 12c for connecting with the first wing 11. The hole 3 may be defined by an opening made in a separate tubular body, and forming the first body 2, or made directly in the respective wing (second wing 12) of the panel 10.

In the embodiment illustrated, the hole 3 is made in the second wing 12 of the panel 10, while the first edge 3a and the second edge 3b are defined by respective containment plates 4 equipped with a recess 4a of predetermined diameter (or width).

The plates 4 are fixed to the wing 12, respectively to the first face 12a and the second face 12b, and located in such a way that the curved edge of the recess 4a is substantially concentric with the hole 3.

The device 1 also comprises a pin 5 extending between a relative first end 5a and a relative second end 5b and slidable in the hole 3 between a first position, wherein the first end 5a protrudes outside the hole 3 and is distal from the first edge 3a, and a second position wherein the first end 5a is proximal to the first edge 3a.

In other words, the pin 5 is slidable (freely) inside the hole 3; in the first position, the first end 5a is distal from the first edge 3a, that is, from the plate 4 which defines the first edge 3a; in the second position, the first end 5a is in contact on the first edge 3a (that is, on the respective plate 4).

In this regard, it should be noted that the first edge 5a (preferably also the second edge 5b) has a peripheral locking shoulder 6 projecting away from the axis of the pin 5 relative to a central portion 5c of it.

In the preferred embodiment, the first edge 5a (that is, the shoulder 6) is defined by a circular crown 6a with a diameter greater than the central portion 5c of the pin 5.

The central portion 5c of the pin 5 has a smaller diameter than the hole 3 and the edges 3a, 3b (that is, the recesses 4a) in such a way that it can slide freely, while the shoulder 6 (that is, the circular crown 6a) has a diameter greater than the edges 3a, 3b (that is, the recesses 4a) in such a way as to block the sliding of the pin 5.

In the preferred embodiment, the pin 5 has shoulders 6, positioned, respectively, at the first end 5a and the second end 5b.

Preferably, the first end 5a and the second end 5b of the pin 5 protrude, respectively, outside the first edge 3a and the second edge 3b of the hole 3.

Each edge 5a, 5b of the pin 5 has a peripheral locking shoulder 6 such that, in the first position of the pin 5, the first end 5a of the pin 5 protrudes outside the first edge 3a of the hole 3, whilst in the second position of the pin 5, the second end 5b of the pin 5 protrudes outside the second edge 3b of the hole 3.

More specifically, in the first position, the shoulder 6 of the first end 5a of the pin 5 is in contact on the first edge 3a of the hole 3 (that is, on the respective plate 4).

Similarly, in the second position, the shoulder 6 of the second end 5b of the pin 5 is in contact on the second edge 3b of the hole 3 (that is, on the respective plate 4).

It should be noted that, in the embodiment illustrated, when the pin 5 is, respectively, in the first and in the second position, the first end 5a and the second end 5b of the pin 5 are in contact with the respective edges 3a, 3b of the hole 2. In light of this, in the preferred embodiment, both in the closed position and in the open position of the panel, the end of the pin 5 facing outside the fixed surfaces (that is, outside the vehicle 100) is substantially coplanar with the face of the panel 10.

The pin 5 is slidingly associated with the hole 3 in such a way as to be able to move freely along the operating direction "A" between the first position, wherein its first end 5a is in contact on the first edge 3a and the second end 5b protrudes from the second edge 3b of the hole 3, and the second position, wherein its second end 5b is in contact on the second edge 3b and the first end 5a protrudes from the first edge 3a of the hole 3. According to this invention, the machine 1 also comprises a second body 7, which can be associated with a further wing (preferably the first wing 11) of the panel 10 or a fixed wall (of the vehicle 100) and can engage with the pin 5 to fix the position.

Advantageously, during the insertion into the second body 7, the pin is kept in the first position, that is to say, projecting from the first face 12a of the second wing 12, being substantially coplanar with the second face of the second wing 12, thereby complying with the requirements of the regulations.

In other words, in the open position, the first end 5a of the pin 5 is distanced from the first face 12a of the second wing 12 by less than 11 millimetres, preferably less than 5 millimetres.

Similarly, in the closed position, the second end 5b of the pin 5 is distanced from the second face 12b of the second wing 12 by less than 11 millimetres, preferably less than 5 millimetres.

The second body 7 comprises an opening 8 which can be aligned to the hole 3 of the first body 2 along the operating direction "A".

At least in the closed position of the panel 10, the opening 8 is positioned in such a way that it faces the first edge 3a of the hole 3.

Moreover, the device comprises elastic retaining means 9 associated with the opening 8 (or with the first end 5a of the pin 5) and operating between the opening 8 and the first end 5a of the pin 5 along a direction "B" transversal to the operating direction "A".

More specifically, the elastic means 9 are elastically mobile along the transversal direction "B" between an interfering position, obstructing the sliding of the first end 5a of the pin 5 in the opening 8, and a non-interfering position, allowing the sliding of the first end 5a of the pin 5 in the opening 8.

In other words, the elastic means 9 are calibrated to apply a predetermined resistant force opposite to the sliding of the pin 5. When the resistant force is exceeded by the pin 5, the elastic means 9, move from the interfering position to the non-interfering position, allowing the movement of the pin 5.

Preferably, the above-mentioned resistant force is less than 20N.

The pin 5 and the elastic means 9 are shaped in such a way that a pressure on an end 5a, 5b of the pin 5 of less than 20N (preferably 10-15N) does not result in any movement of the elastic means 9.

In other words, the pin 5 and the elastic means 9 are shaped in such a way that a pressure on the second end 5b of the pin 5 of more than 20N (preferably 10-15N) results in a movement of the active portion 9a of the elastic means 9, imparted by the first end 5a of the pin 5.

The first end 5a of the pin 5 and/or the opening 8 are shaped for generating the movement of the elastic means 9 from the interfering position to the non-interfering position during the movement of the pin 5 inside the opening 8 along the operating direction "A".

More specifically, the shoulder 6 is shaped to perform the movement.

In the preferred embodiment, the elastic means 9 are at least partly housed in the opening 8 and comprise at least one active portion 9a movable between the interfering position and the non-interfering position.

In the interfering position, the active portion 9a is positioned in a gap for passage of the pin 5 (in particular of the shoulder).

In the non-interfering position, the active portion 9b is located outside the passage gap.

The first end 5a of the pin 5 has at least one peripheral portion 5d which can be engaged with the active portion 9a of the elastic means 9 and shaped in such a way as to impart to the active portion 9a the movement from the interfering position to the non-interfering position.

In other words, the peripheral portion 5d is shaped in such a way that following contact with the active portion 9a, a translation of the peripheral portion 5d along the operating direction "A" corresponds to a translation of the active portion 9a along the transversal direction "B" between the interfering position and the non-interfering position.

The peripheral portion 5d is shaped substantially as a wedge which is inclined relative to the transversal direction "B" to impart the translational movement to the active portion 9a.

Preferably, the peripheral portion 5d of the pin corresponds to the shoulder 6.

In the preferred embodiment, the shoulder 6 (and the peripheral portion 5d) is defined by a first 6b and a second annular wall 6c inclined with respect to the operating direction "A" by an angle of between 10° and 80°, preferably between 30° and 60° with opposite orientation.

In other words, the shoulder 6 is active on the elastic means in both directions of movement of the pin 5 along the operating direction "A".

The elastic means 9 are, on the other hand, defined by a spring 20 anchored to the second body 7 and having a segment 21 inserted inside the opening 8 for forming the active portion 9a.

In the preferred embodiment, the spring 20 is defined by a wire-shaped element 22 in the form of a "C", wherein the segment 21 (that is, the active portion 9a) is defined by an arm of the "C".

Alternatively, the elastic means might be integrated in the second body, that is to say, be defined by an elastic tab integral with the opening 8.

It should be noted that the second body 7 is defined by a tubular body 23 anchored, that is, which can be anchored, to the first wing 11 of the panel 10.

In this regard, it should be noted that the first wing 11 is equipped with a respective housing 15 for the second body 7 of the locking device 1, that is to say, for the tubular body 23.

The tubular body 23 is provided, along the relative periphery, with at least one notch 24 in which the active portion 9a of the elastic means 9 is movably housed to allow the movement between the interfering and the non-interfering position.

Preferably, the locking device comprises at least two second bodies 7, one associated with the first wing 11 of the panel 10 and one associated with the fixed wall of the vehicle 100.

It should be noted that the second bodies 7 are substantially equidistant from an axis of rotation "C" of the second wing 12.

In other words, the second bodies are substantially equidistant from the hinge body 13 (along a direction perpendicular to the hinge axis of the second wing 12).

The second body 7 fixed to the first wing 11 is positioned in such a way that, in the closed position, the hole 3 of the first body 2 is aligned with its opening 8 along the operating direction "A", in such a way that the first edge 3a of the hole 3 faces the opening 8.

Similarly, the second body 7 fixed to the fixed wall of the vehicle 100 is positioned in such a way that, in the open position, the hole 3 of the first body 2 is aligned with its opening 8 along the operating direction "A", in such a way that the second edge 3b of the hole 3 faces the opening 8. The second body 7 fixed to the first wing 11 is engageable by the first end 5a of the pin 5, while the second body 7 fixed to the fixed wall of the vehicle 100 is engageable by the second end 5b of the pin 5.

A pressure on the second end 5b of the pin 5 (greater than a predetermined value, preferably 10-15N) results in a movement of the active portion 9a of the elastic means 9 of the second body 7 associated with the first wing 11, whilst a pressure on the first end 5a of the pin 5 (greater than a predetermined value, preferably 10-15N) results in a movement of the active portion 9a of the elastic means 9 of the second body 7 associated with the fixed wall (of the vehicle 100).

The invention achieves the preset aims and brings major advantages.

In effect, the presence of a sliding pin which can engage with the second body without protruding outside the panel allows the requirements of the current regulations to be complied with, thus increasing the safety of the operators.

Moreover, the use of structurally simple elements such as plates, springs and tubular bodies allows the application the locking device also to existing panels.

Also, the use of a flexible hinge body, defined by a flexible flap of material, further increases the safety of the panel, preventing the presence of blunt elements.

## Claims

1. A device for locking identification panels, **characterised in that** it comprises:
- a first body (2), which can be associated with wing (12) of the panel (10) and equipped with a through hole (3) extending along an operating direction (A) between a relative first edge (3a) and a relative second edge (3b);
- at least one pin (5) extending between a relative first end (5a) and a relative second end (5b) and slidable in the hole (3) between a first position, wherein the first end (5a) protrudes outside the hole (3) and is distal from the first edge (3a), and a second position wherein the first end (5a) is proximal to the first edge (3a);
- a second body (7), which can be associated with a further wing (11) of the panel (10) or with a fixed wall of the vehicle (100), and engageable with the first end (5a) of the pin (5) to fix the position.

2. The device according to claim 1, **characterised in that** the second body (7) comprises an opening (8) which can be aligned with the hole (3) of the first body (2) along the operating direction (A) in such a way as to face the first edge (3a) of the hole (3); the device also comprising elastic retaining means (9) associated with the opening (8) or with the first end (5a) of the pin (5) and operating between the opening (8) and the first end (5a) of the pin (5) along a direction (B) transversal to the operating direction (A); the elastic means (9) being elastically mobile along the transversal direction (B) between an interfering position, obstructing the sliding of the first end (5a) of the pin (5) in the opening (8), and a non-interfering position, allowing the sliding of the first end (5a) of the pin (5) in the opening (8).

3. The device according to claim 2, **characterised in that** the first end (5a) of the pin (5) and/or the opening (8) are shaped for moving the elastic means (9) from the interfering position to the non-interfering position during the movement of the pin (5) inside the opening (8) along the operating direction (A).

4. The device according to claim 3, **characterised in that** the elastic means (9) are at least partly housed in the opening (8) and comprise at least one active portion (9a) movable between the interfering position, wherein the active portion (9a) is positioned inside a gap for the passage of the pin (5), and the non-interfering position, wherein the active portion (9a) is located outside the passage gap; the first end (5a) of the pin (5) having at least one peripheral portion (5d) engageable with the active portion (9a) of the elastic means (9) and shaped in such a way that, following contact between the peripheral portion (5d) and the active portion (9a), a translation of the peripheral portion (5d) along the operating direction (A) corresponds to a translation of the active portion (9a) along the transversal direction (B) between the interfering position and the non-interfering position.

5. The device according to any one of the preceding claims, **characterised in that** the first end (5a) and the second end (5b) of the pin (5) protrude, respectively, outside the pin (3a) and the second edge (3b) of the hole (3) and each have a peripheral locking shoulder (6) to prevent the passing through of the hole (3); in the first position, the first end (5a) of the pin (5) protrudes outside a position distal to the first edge (3a) of the hole (3); in the second position, the second end (5b) of the pin (5) protrudes outside a position distal to the second edge (3b) of the hole (3).

6. An identification panel, comprising a first wing (11) and a second wing (12) each equipped with a first face (11 a, 12a) and a second face (11 b, 12b) opposite to each other; the first wing (11) and the second wing (12) being adjacent and rotatably associated in such a way that the second wing (12) is rotatable about the first wing (11) between an open position, wherein the wings (11, 12) are coplanar and side by side, and a closed position, wherein the wings (11, 12) are superposed and the respective first faces (11 a, 12a) abut each other,
**characterised in that** it comprises a locking device (1) according to any one of the preceding claims, wherein the first body (2) is associated with the second wing (12) and the second body (7) is associated with the first wing (11).

7. The panel according to claim 6, **characterised in that** in the open position the first end (5a) of the pin (5) is spaced from the first face (12a) of the second wing (12) by less than 11 millimetres, and **in that** in the closed position the second end (5b) of the pin (5) is spaced from the second face (12b) of the second wing (12) by less than 11 millimetres.

8. The panel according to claim 6 or 7, **characterised in that** the locking device comprises two second bodies (7), one associated with the first wing (11) of the panel (10) and one associated with a fixed wall of the vehicle (100).

9. The panel according to claim 8, **characterised in that** the second bodies (7) are substantially equidistant from an axis of rotation (C) of the second wing (12).

10. The panel according to any one of claims 6 to 9, **characterised in that** the first wing (11) is equipped with a respective housing (15) for the second body (7) of the locking device (1); the second body (7) being defined by at least one tubular body (23) located in the housing (15) and equipped with at least one side notch (24) which can be crossed by the active portion (9a) of the elastic means (9).

11. The panel according to any one of claims 6 to 10, **characterised in that** the hole (3) is defined by a through hole made in the second wing (12), delimited by two containment plates (4) positioned on opposite sides of the through hole and defining, respectively, the first edge (3a) and the second edge (3b); the plates (4) being fixed, respectively, to the first face (12a) and the second face (12b) of the second wing (12) near the hole.
